# EUROPEAN PATENT SPECIFICATION

(11) **EP 0 781 217 B1**
(45) Date of publication and mention of the grant of the patent: **23.08.2000**
(21) Application number: 96918919.0
(22) Date of filing: 28.06.1996
(51) Int. Cl.: B60R 21/045

(54) **KNEE BOLSTER OF A VEHICLE**
FAHRZEUG-KNIEPOLSTER
APPUIE-GENOUX DE VEHICULE

(30) Priority: 28.07.1995 KR 9522657; 28.07.1995 KR 9522658
(43) Date of publication of application: 02.07.1997
(73) Proprietor: DAEWOO MOTOR CO., LTD., Bupyung-ku, Incheon 403-030 (KR)
(72) Inventor: HUR, Won-Ho, Bupyung-ku, Incheon 403-030 (KR)
(74) Representative: Flaccus, Rolf-Dieter, Dr.
(86) International application number: KR9600101
(87) International publication number: WO9704992

(56) References cited:
- GB-A- 2 279 627
- US-A- 4 709 943
- US-A- 5 037 130
- US-A- 5 273 314

## Description

### TECHNICAL FIELD

The present invention relates to a knee bolster of a vehicle, and more particularly to a knee bolster of a vehicle capable of being light in weight and easy in manufacturing, having a favorable shock absorption force in the event of a car crash, effectively decreasing or preventing a submarine phenomena and alleviating an impact applied to a passenger.

### BACKGROUND ART

Generally, a front panel of a car chamber within a vehicle is attached with side hinge pillars or A pillars onto the left and right sides thereof, and a tie bar shaped as a pipe is transversely installed across the side hinge pillars provided on both sides. An instrument panel which is fixed to the tie bar is equipped with various adjusting devices of the vehicle such as a speedometer and an audio system and an air bag for protecting passengers.

Meanwhile, when a car crash is taking place, a submarine phenomena occurs such that the lower part of the body of a driver or a passenger occupying an assistant driver's seat is forcibly pushed down to be put under the instrument panel due to the inertia. In this case, the knee of the driver or the passenger sitting on the assistant driver's seat is run into the framework of the vehicle and, furthermore, the upper parts of the bodies of the passengers are inclined to move forward to the bottom side due to the submarine phenomena. Thus, even though the air bag is properly inflated upon the car crash, the upper part of the body hits against the lower side of the air bag or is to be out of the protecting coverage of the air bag. Thus, the air bag is detrimental to effective protection for passengers.

Therefore, a knee bolster is installed to the front of the instrument panel for absorbing the impact upon the driver or passenger occupying the assistant driver's seat during the car crash, so that the impact upon the knee of the passengers is decreased while preventing or reducing the inadvertent influence of the submarine phenomena.

The knee bolster is largely classified into two kinds: one for driver's seat and the other for assistant driver's seat. Here, since an interior package in front of the driver's seat has a different structure from that in front of the assistant driver's seat, the knee bolsters for driver's seat and for assistant driver's seat have different structures.

Typically, the knee bolster is fabricated by a plurality of pieces of steel plate to be coupled with one another via bolts or a welding to involve a lot of working processes, which degrades workability and productivity. In addition to this drawback, the number of the parts constituting the knee bolster is so many to make the part management difficult and dimensional stability be low because of a welding deformation, which, in turn, degrade the workability and assembling productivity.

Also, a substance of the conventional knee bolster is a steel to have a disadvantage of being too heavy, thereby increasing overall weight of the vehicle.

A conventional knee bolster is filled with a foam substance into a hollowed internal space, which also is heavy and so expensive.

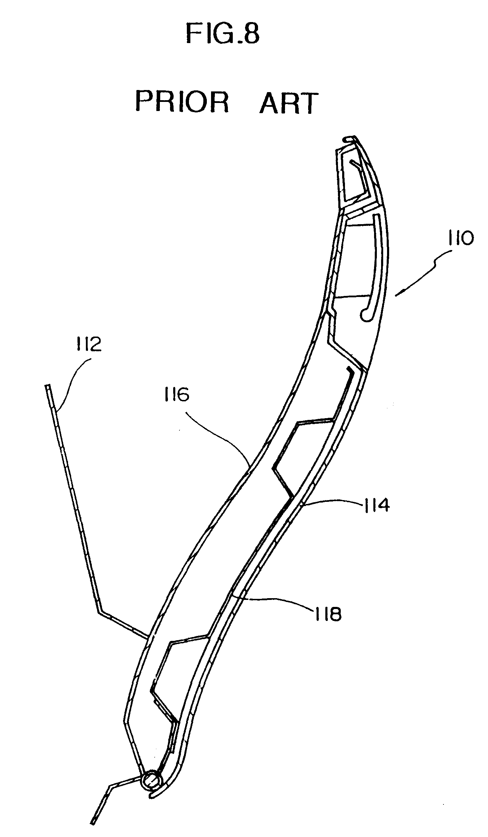

FIG. 8 is a sectional view showing a general knee bolster 110 for assistant driver's seat. Knee bolster 110 is installed to an instrument panel (not shown) in front of the assistant driver's seat of an automobile to be integrally formed with a globe box 112 in a body. As shown in FIG. 8, knee bolster 110 includes an outer plate 114, an inner plate 116 and a shock absorbing plate 118 installed between outer plate 114 and inner plate 116. The shock absorbing plate 118 is formed of a steel.

In the conventional knee bolster formed as above, when the passenger collides against outer plate 114 of the knee bolster resulting from a car crash, the impact force caused by the collision is transferred to shock absorbing plate 118. If the impact force is slight, the stiffness of shock absorbing plate 118 elastically bears the impact force. Whereas, shock absorbing plate 118 is plastic-deformed by a strong impact force to absorb and eliminate the impact force.

In conventional knee bolster 110 described as above, however, the impact force is absorbed only by shock absorbing plate 118 formed of steel. Accordingly, the submarine phenomena cannot be prevented when the impact force is significantly powerful to be out of the confines of the deformation. What's worse, since shock absorbing plate 118 is formed of the steel, the impact applied to the passenger resulting from shock absorbing plate 118 is notably great as much, as a consequence, it has a drawback of involving a danger that the passenger is highly liable to be injured.

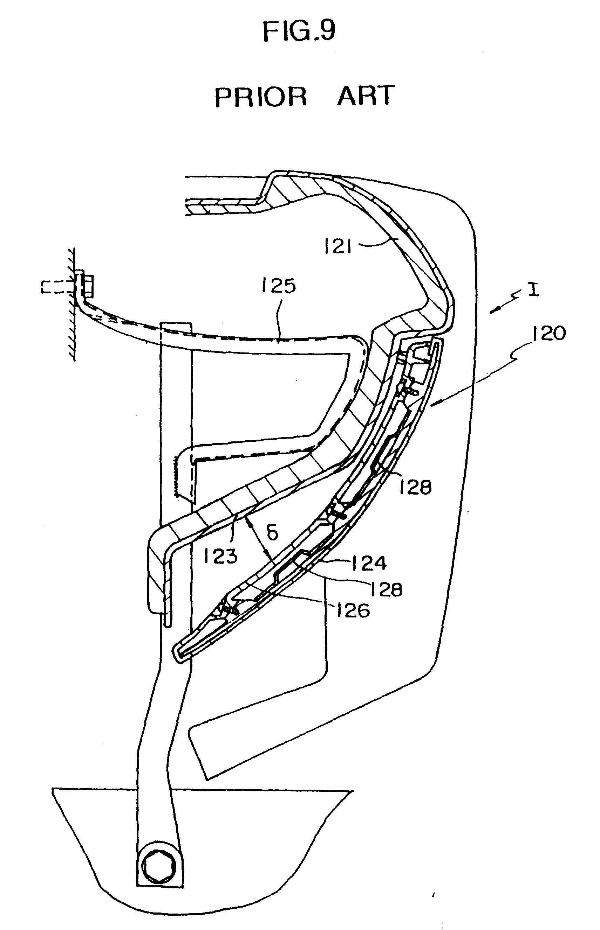

U.S. Patent Nos. 4,662,649, 4,834,422, 5,071,162 and 5,312,133 disclose knee bolsters for automobiles which are related prior arts. Among these, U.S. Patent No. 5,071,162 issued to Takagawa dated in December 10, 1992 describes a knee bolster 120 for assistant driver's seat, in which an impact volume in the car crash is doubly absorbed by both a steel plate 128 and a urethan member 121. Knee bolster 120, as shown in FIG. 9, is provided with a steel plate 128 between an outer plate 124 and an inner plate 126 and a reinforcing plate 123 attached with a urethan member 121 onto the inner surface thereof. Inner plate 126 and reinforcing plate 123 are spaced apart from each other by an interval of δ. A reference number I denotes an instrument panel.

In the event of the car crash, the knee of the passenger presses outer plate 124 of knee bolster 120, and steel plate 128 primarily tolerates the impact force while being inwardly plastic-deformed. After steel plate 128 contacts reinforcing plate 123, reinforcing plate 123 secondarily absorbs the impact force.

However, above-described knee bolster 120 requires separate reinforcing plate 123, and it is very difficult to mold the urethan corresponding to the shape of reinforcing plate 123. Moreover, since inner plate 126 and reinforcing plate 123 are spaced apart from each other by the interval of δ, the shock absorbing effect by urethan member 121 is relatively slight. Furthermore, urethan member 121 is adhered to reinforcing plate 123 which is then supported by a support member 125 without being additionally supported. For this construction, urethan member 121 cannot effectively afford a reaction force with respect to a passenger who imposes the impact force. Consequently, it can be noted that the shock absorbing effect by urethan member 121 is trivial.

In addition, support member 125 has a complicated structure and supports merely a portion of reinforcing plate 123. Thus, the reaction force afforded by reinforcing plate 123 is relatively weak.

### DISCLOSURE OF INVENTION

The present invention is devised to solve the foregoing problems. It is an object of the present invention to provide a knee bolster of a vehicle capable of enhancing workability and assembling productivity, having a favorable shock absorbing capacity during a car crash and decreasing or preventing a submarine phenomena.

It is another object of the present invention to provide a knee bolster of a vehicle for decreasing a car weight to make the vehicle light.

It is still another object of the present invention to provide a knee bolster for assistant driver's seat, wherein an impact force upon a car crash is absorbed in both ways to prevent the occurrence of a submarine phenomena with respect to a passenger sitting on the assistant driver's seat while reducing an impact caused by the knee bolster to be applied to the passenger on the assistant driver's seat.

To achieve the above object of the present invention, a knee bolster of a vehicle includes a knee bolster main body which is fabricated substance for absorbing an impact in the event of a car crash and is shaped as a hollowed rectangular box, and at least one knee bolster main body support member which is fixed to the front plane of the knee bolster main body for supporting the knee bolster main body to a tie bar of the vehicle.

Here, at least one knee bolster main body support member is fixed to at least one pair of fixtures formed to the front plane of the knee bolster main body, and at least one pair of fixtures form a clearance slidably fitted with the knee bolster main body support member in cooperation with the front plane of the knee bolster main body, respectively.

Preferably, at least one pair of knee bolster main body support members have a pair of projections fitted into the clearances of the respective fixtures and a semi-circular gripping part formed to be opposite to the pair of projections for gripping the tie bar. More preferably, the gripping part of the knee bolster main body support member is coupled to the tie bar via a bonding.

It is also preferable that the knee bolster main body further includes a plurality of reinforcing plates installed to a hollowed internal wall in the horizontal direction, in which the reinforcing plate has a bending portion in a zig-zag form for easily bringing about a rupture when the impact is applied to the knee bolster main body.

Furthermore, the knee bolster main body preferably includes a coupling unit which is coupled with a side hinge pillar and a frame assembly instrument panel center of the vehicle.

According to a further preferred embodiment of the present invention, the knee bolster main body is provided with a cutaway portion for accommodating a steering column cover of the vehicle in the upper central portion thereof, and at least one pair of fixtures are furnished to the front plane of the knee bolster main body for fixing the at least one knee bolster main body support member.

At this time, at least one pair of fixtures may form a clearance slidably fitted with the knee bolster main body support member in cooperation with the front plane of the knee bolster main body, respectively. In addition, at least one pair of knee bolster main body support members may include a pair of projections fitted into the clearances of the respective fixtures and a semi-circular gripping part formed to be opposite to the pair of projections for gripping the tie bar.

Preferably, the gripping part of the knee bolster main body support member is coupled to the tie bar via a bonding, and the knee bolster main body further includes a plurality of reinforcing plates installed to a hollowed internal wall in the horizontal direction.

Furthermore, it is preferable that the reinforcing plate has a bending portion in a zig-zag form for easily bringing about a rupture when the impact is applied to the knee bolster main body, and the knee bolster main body has a coupling unit which is coupled with a side hinge pillar and a frame assembly instrument panel center of the vehicle.

Therefore, the knee bolster is formed of the single body of aluminum substance to enhance workability and assembling productivity, abolish fastidious part management, and accomplish lightweight of the vehicle. Besides, the knee bolster main body and knee bolster main body support member are coupled via the fitting manner to contrive further improvement of the workability and assembling productivity.

### BRIEF DESCRIPTION OF THE DRAWINGS

The above objects and other advantages of the present invention will become more apparent by describing in detail preferred embodiments thereof with reference to the attached drawings in which:
FIG. 1 is a perspective view showing a knee bolster of a vehicle for a driver according to a first embodiment of the present invention;
FIG. 2 is an exploded perspective view showing a state that the knee bolster main body support member is separated from the knee bolster main body of FIG. 1;
FIG. 3 is a perspective view showing a state that the knee bolster shown in FIG. 2 is fixed to a tie bar;
FIG. 4 is a rear view of the knee bolster shown in FIG. 1;
FIG. 5 is a perspective view showing a state that the knee bolster of FIG. 1 is fixed to a frame assembly instrument panel center;
FIG. 6 is a side view of the knee bolster shown in FIG. 3;
FIG. 7 is a perspective view showing the knee bolster of the vehicle for a passenger on the assistant driver's seat according to a second embodiment of the present invention;
FIG. 8 is a side elevational view showing a generally conventional knee bolster;
FIG. 9 is a side elevational view showing another generally conventional knee bolster;

### BEST MODE FOR CARRYING OUT OF THE INVENTION

A first embodiment, a second embodiment and a third embodiment of a knee bolster of a vehicle according to the present invention will be described in detail with reference to accompanying drawings.

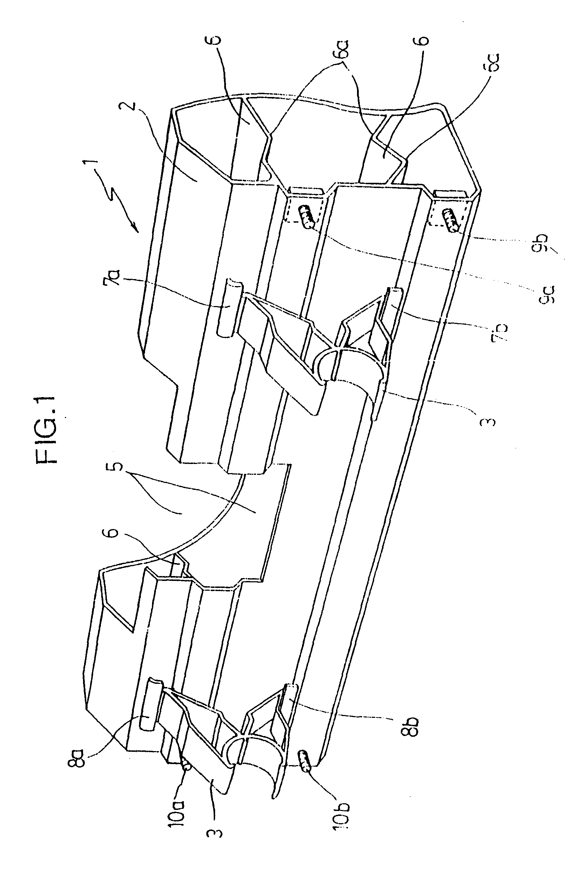

FIGS. 1 to 6 illustrate the knee bolster of the vehicle according to the first embodiment of the present invention.

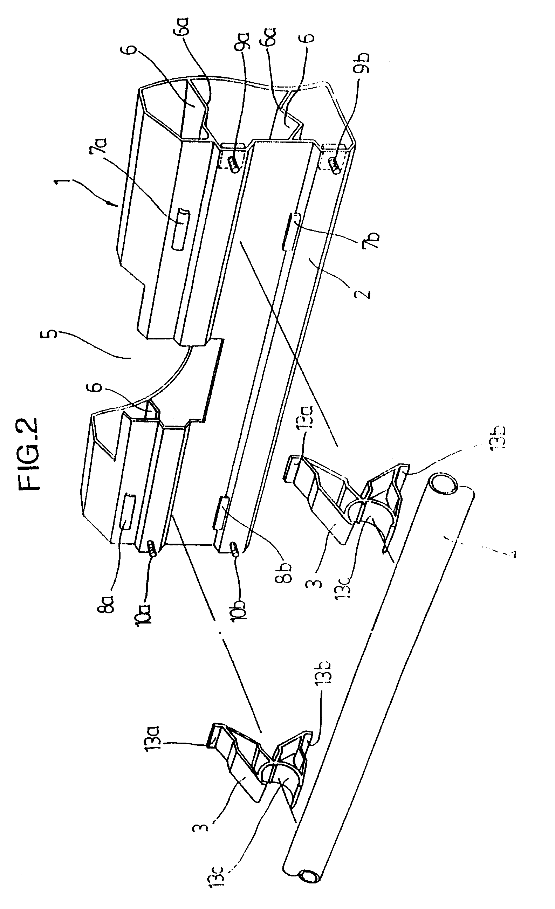

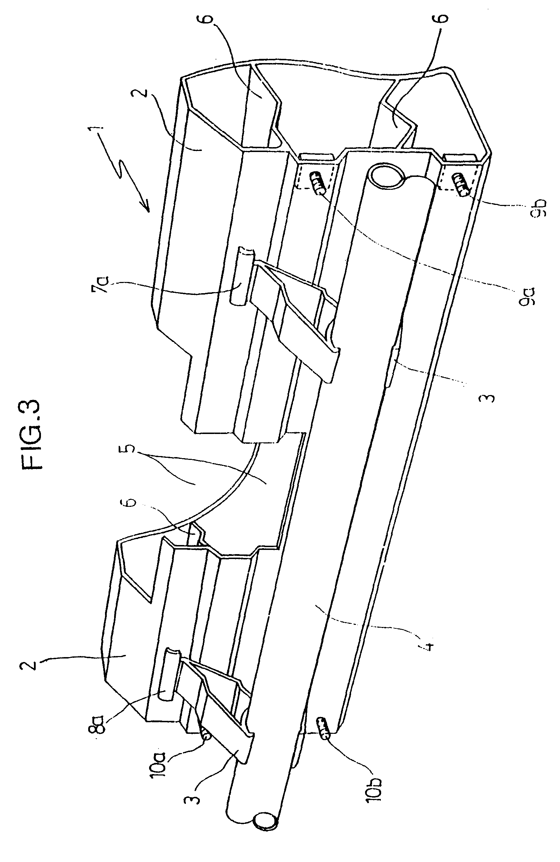

FIG. 1 is a perspective view of knee bolster 1 for a driver showing a state that a knee bolster main body support member 3 is coupled to a knee bolster main body 2, and FIG. 2 is an exploded perspective view showing a state that knee bolster main body support member 3 is separated from knee bolster main body 2. FIG. 3 is a perspective view showing a state that knee bolster 1 is supported by a tie bar 4 of the vehicle by knee bolster main body support member 3.

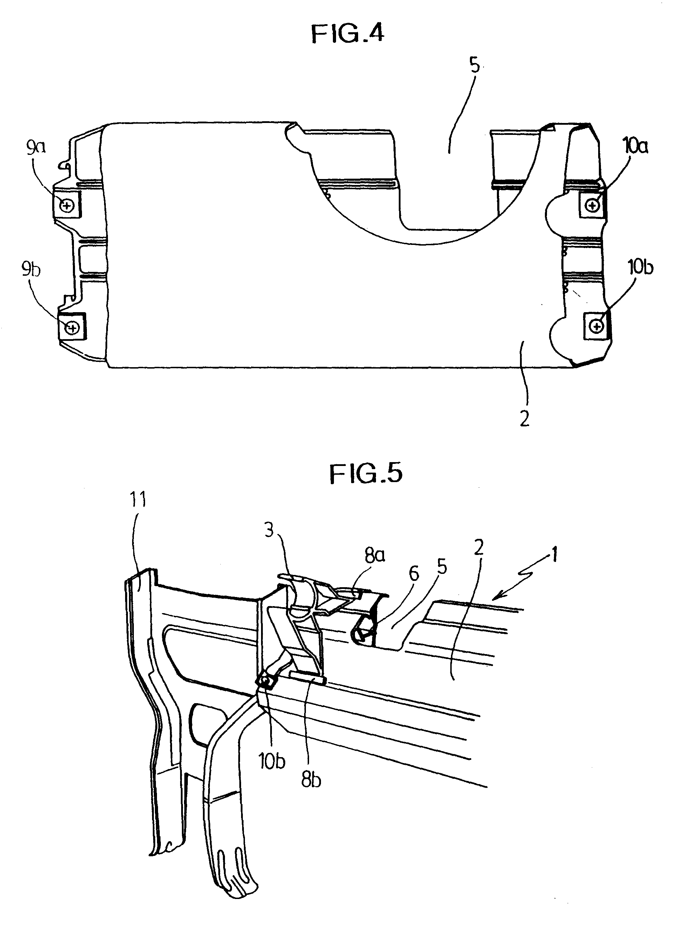

Referring to FIGS. 1, 2 and 3, knee bolster 1 includes knee bolster main body 2 for absorbing an impact during a car crash and knee bolster main body support member 3 which supports knee bolster main body 2 to tie bar 4. Knee bolster main body 2 is shaped as a hollowed rectangular box having both sides opened. A cutaway portion 5 for receiving a steering column cover (not shown) is formed in the upper central portion of knee bolster main body 2. Cutaway portion 5 has a substantially rectangular shape at the front side of knee bolster 2 and has a semicircular shape at the rear side of knee bolster main body 2 as shown in FIG. 4. The front side of knee bolster main body 2 has a plurality of step planes, and the rear side thereof has a gently-curved surface. A plurality of reinforcing plates 6 are horizontally installed to the inner wall of hollowed knee bolster main body 2 for elastically absorbing the impact produced during the car crash. Horizontal reinforcing plate 6 is bent in a zig-zag form to bring about a rupture at a bending portion 6a of reinforcing plate 6 when knee bolster main body 2 is applied with the impact, thereby further enhancing the absorption of the impact.

A plurality of pairs, preferably two pairs of fixtures 7a & 7b and 8a & 8b, for fixing knee bolster main body support member 3 are formed to the front plane of knee bolster main body 2.

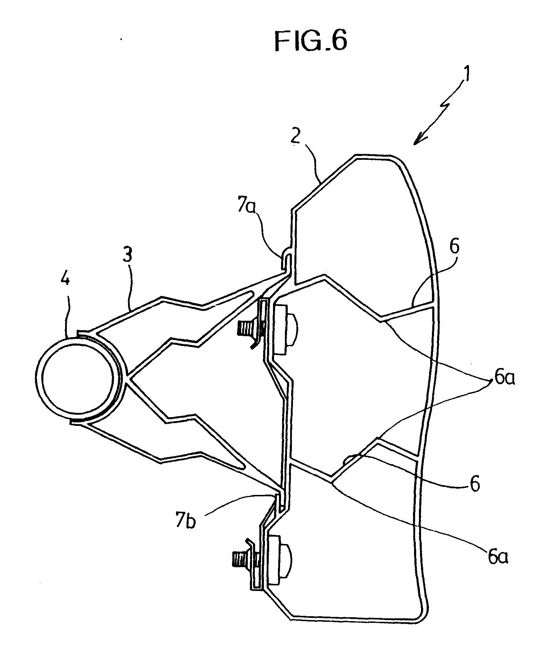

As shown in FIG. 6, upper fixtures 7a and 8a constitute respective pairs together with corresponding lower fixtures 7b and 8b. Respective free ends of upper and lower fixtures 7a & 7b and 8a & 8b of respective pairs are formed to have a clearance from the front plane of knee bolster main body 2 while being installed to inwardly oppose to each other. Both lateral ends of the front plane of knee bolster main body 2 are formed with two pairs of coupling members, e.g., bolts 9a & 9b and 10a & 10b. Here, bolts 9a and 9b are coupled to side hinge pillars (not shown) and bolts 10a and 10b are coupled to brackets of a frame assembly instrument panel center 11 (refer to FIG.4 and FIG. 5).

According to the first embodiment of the present invention, knee bolster main body 2 is formed by a single body of an aluminum substance which has a favorable shock absorption force and impact-resistant property.

Preferably, in addition to fixing one side of knee bolster main body 2 to the side hinge pillar by means of the coupling parts such as bolts 9a & 9b and 10a & 10b, and fixing the other side thereof to frame assembly instrument panel center 11 as shown in FIG. 5, knee bolster main body 2 is firmly supported by tie bar 4 via knee bolster main body support member 3 for more securely absorbing the impact upon the car crash and reducing/preventing the submarine phenomena of the passenger.

As shown in FIGS. 1, 2, 3 and 6, respective knee bolster main body support members 3 are equipped with a pair of projections 13a and 13b slidably fitted along the front plane of knee bolster main body 2 into the clearances of fixtures 7a & 7b and 8a & 8b of knee bolster main body 2 from the side of the clearance between fixtures 7a & 7b and 8a & 8b at first end portion thereof. Projections 13a and 13b are formed to outwardly oppose to each other to be inserted into the clearance between fixtures 9a & 9b and 10a & 10b.

Knee bolster main body support member 3 is formed with a semi-circular gripping part 13c coupled with tie bar 4 to a second end portion thereof. Gripping part 13c has a dimension corresponding the diameter of tie bar 4 for easily gripping tie bar 4. When knee bolster main body support member 3 is fixed to tie bar 4, it is preferable that an adhesive is applied to the inner concave surface of gripping part 13c to be coupled to tie bar 4 via a bonding for improving a workability efficiency.

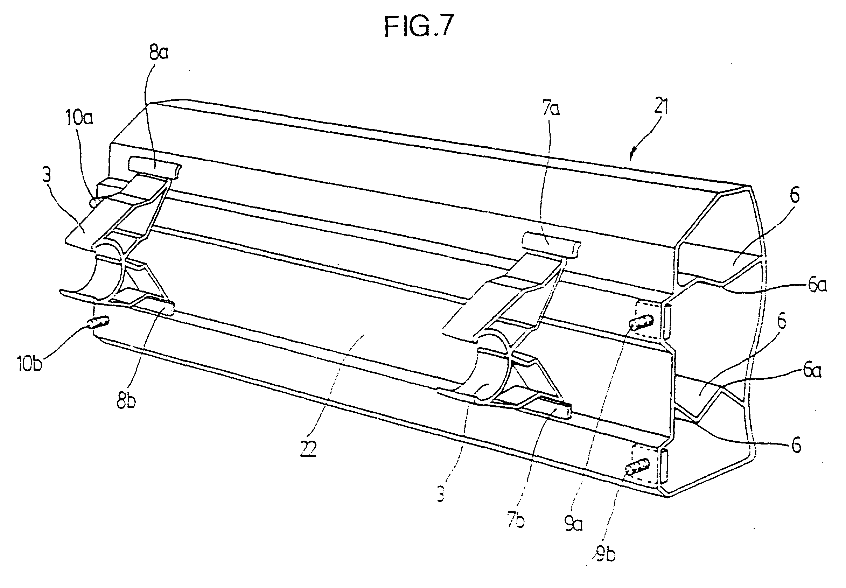

FIG. 7 illustrates a knee bolster 21 for passenger on an assistant driver's seat according to a second embodiment of the present invention. A different particular of knee bolster 21 shown in FIG. 7 from knee bolster 1 shown in FIG. 1 is in that the cutaway portion is not formed in the upper central portion of a knee bolster main body 22. This is because no steering column cover of the vehicle is required to knee bolster 21 for the passenger on the assistant driver's seat. Therefore, knee bolster 21 for the passenger on the assistant driver's seat has the same structure as knee bolster 1 for the driver shown in FIG. 1 except the cutaway portion for being inserted with the steering column cover, detailed description thereof will thus not be repeated.

As described above, the knee bolster according to the first and second embodiments of the present invention is fabricated of the aluminum substance to enhance the workability, facilitate the manufacturing and decrease the weight, thereby permitting to contrive the lightweight of the vehicle.

Besides that the knee bolster is attached to the side hinge pillars and frame assembly instrument panel center, it is fixed to the tie bar by means of the knee bolster main body support member to be effective in absorbing the impact without being deviated from the original position and the submarine phenomena can be decreased otherwise prevented.

Also, the knee bolster main body support member slides to be simply fitted into the fixtures of the knee bolster main body to improve the assembling productivity.

While the present invention has been particularly shown and described with reference to particular embodiment thereof, it will be understood by those skilled in the art that various changes in form and details may be effected therein without departing from the scope of the invention as defined by the appended claims.

## Claims

1. A knee bolster of a vehicle comprising:
a knee bolster main body (2) fabricated of an aluminum substance for absorbing an impact in the event of a car crash and shaped as a hollowed rectangular box; and
at least one knee bolster main body support member (3) fixed to the front plane of said knee bolster main body (2) for supporting said knee bolster main body (2) to a tie bar (4) of said vehicle.

2. The knee bolster as claimed in claim 1, wherein said at least one knee bolster main body support member (3) is fixed to at least one pair of fixtures (7a, 7b; 8a, 8b) formed to said front plane of said knee bolster main body (2).

3. The knee bolster as claimed in claim 2, wherein said at least one pair of fixtures (7a, 7b; 8a, 8b) form a clearance slidably fitted with said knee bolster main body support member (3) in cooperation with said front plane of said knee bolster main body (2), respectively.

4. The knee bolster as claimed in claim 3, wherein said at least one pair of knee bolster main body support members (3) comprise a pair of projections (13a, 13b) fitted into said clearances of said respective fixtures and a semicircular gripping part (13c) formed to be opposite to said pair of projections for gripping said tie bar (4).

5. The knee bolster as claimed in claim 4, wherein said gripping part (13c) of said knee bolster main body support member (3) is coupled to said tie bar (4) via a bonding.

6. The knee bolster as claimed in claim 1, wherein said knee bolster main body (2) further comprises a plurality of reinforcing plates (6) installed to a hollowed internal wall in the horizontal direction.

7. The knee bolster as claimed in claim 6, wherein said reinforcing plate (6) comprises a bending portion (6a) in a zig-zag form for easily bringing about a rupture when said impact is applied to said knee bolster main body (2).

8. The knee bolster as claimed in claim 7, wherein said knee bolster main body (2) comprises coupling means (9a, 9b; 10a, 10b) for being coupled with a side hinge pillar and a frame assembly instrument panel center (11) of said vehicle.

9. The knee bolster as claimed in claim 1, wherein said knee bolster main body (2) is provided with a cutaway portion (5) for accommodating a steering column cover of said vehicle in the upper central portion thereof and at least one pair of fixtures are furnished to said front plane of said knee bolster main body (2) for fixing said at least one knee bolster main body support member (3).

## Patentansprüche

1. Fahrzeugkniepolster, umfassend:
ein Kniepolsterhauptstück (2) aus einer Aluminiumsubstanz, um einen Aufprall im Falle eines Autounfalls abzudämpfen, in der Form einer ausgehöhlten, rechteckigen Kiste, mindestens ein Kniepolsterhauptstück-Stützglied (3), welches an der vorderen Fläche des besagten Kniepolsterhauptstückes (2) befestigt ist, um besagtes Kniepolsterhauptstück (2) an einer Zugstange (4) des besagten Fahrzeuges zu befestigen.

2. Kniepolster gemäß Anspruch 1, dadurch gekennzeichnet, daß das genannte wenigstens eine Kniepolsterhauptstück-Stützglied (3) an mindestens einem Paar Befestigungsvorrichtungen (7a, 7b; 8a, 8b) an besagter Vorderfläche des besagten Kniepolsterhauptstückes (2) befestigt ist.

3. Kniepolster gemäß Anspruch 2, dadurch gekennzeichnet, daß das genannte wenigstens eine Paar Befestigungsvorrichtungen (7a, 7b; 8a, 8b) einen Zwischenraum bildet, der verschiebbar angebracht ist an besagtem Kniepolsterhauptstück-Stützglied (3), in Zusammenwirkung mit besagter Vorderfläche des genannten Kniepolsterhauptstückes (2).

4. Kniepolster gemäß Anspruch 3, dadurch gekennzeichnet, daß das genannte wenigstens eine Paar Kniepolsterhauptstück-Stützglieder (3) ein Paar Überstände umfasst (13a, 13b), die in besagte Zwischenräume besagter jeweiliger Befestigungsvorrichtungen passen, und ein halbkreisförmiges Greifteil (13c), das so ausgebildet ist, daß es gegenüber besagtem Paar Überstände liegt, um besagte Zugstange (4) zu greifen.

5. Kniepolster gemäß Anspruch 4, dadurch gekennzeichnet, daß besagte Greifvorrichtung (13c) des besagten Kniepolsterhauptstück-Stützgliedes (3) mittels eines Verbindungsstücks mit besagter Zugstange (4) verbunden ist.

6. Kniepolster gemäß Anspruch 1, dadurch gekennzeichnet, daß besagtes Kniepolsterhauptstück (2) des weiteren eine Anzahl Verstärkungsplatten (6) umfaßt, welche an einer hohlen Innenwand in horizontaler Richtung angebracht sind.

7. Kniepolster gemäß Anspruch 6, dadurch gekennzeichnet, daß besagte Verstärkungsplatte (6) ein biegsames Stück (6a) in Zickzackform umfaßt, um leicht einen Bruch zu verursachen, wenn besagter Aufprall auf besagtes Kniepolsterhauptstück (2) einwirkt.

8. Kniepolster gemäß Anspruch 7, dadurch gekennzeichnet, daß besagtes Kniepolsterhauptstück (2) Kupplungsvorrichtungen (9a, 9b; 10a, 10b) umfaßt, die an einen seitlichen Drehpfeiler gekoppelt werden, und eine Rahmeneinheitinstrumentenanzeige (11) des genannten Fahrzeugs.

9. Kniepolster gemäß Anspruch 1, dadurch gekennzeichnet, daß besagtes Kniepolsterhauptstück (2) mit einer Einkerbung (5) versehen ist, um eine Lenksäulenabdeckung des besagten Fahrzeugs im oberen zentralen Teil aufzunehmen, und daß mindestens ein Paar Befestigungsvorrichtungen an besagter Vorderseite des besagten Kniepolsterhauptstückes (2) vorhanden ist, um das genannte wenigstens eine Kniepolsterhauptstück-Stützglied (3) zu befestigen.

## Revendications

1. Protège-genoux d'un véhicule comprenant :
un corps principal de protège-genoux (2) fabriqué en une substance d'aluminium pour absorber un choc en cas de collision du véhicule et ayant la forme d'une boîte rectangulaire creuse et au moins un élément support de corps principal de protège-genoux (3) fixé au plan avant du corps principal de protège-genoux (2) pour maintenir ledit corps principal de protège-genoux (2) à un tirant (4) dudit véhicule.

2. Protège-genoux selon la revendication 1, dans lequel ledit, au moins un, élément support de corps principal de protège-genoux (3) est fixé à au moins une paire de fixations (7a, 7b; 8a, 8b) formées sur ledit plan avant dudit corps principal de protège-genoux (2).

3. Protège-genoux selon la revendication 2, dans lequel ladite, au moins, une paire de fixations (7a, 7b; 8a, 8b) forme un espacement équipé de manière coulissante dudit élément support de corps principal de protège-genoux (3) respectivement en coopération avec ledit plan avant dudit corps principal de protège-genoux (2).

4. Protège-genoux selon la revendication 3, dans lequel ladite, au moins une, paire d'éléments supports de corps principal de protège-genoux (3) comprend une paire de saillies (13a, 13b) engagées dans lesdits espacements desdites fixations respectives et une pièce de serrage semi-circulaire (13c) formée pour être opposée à ladite paire de saillies pour serrer ledit tirant (4).

5. Protège-genoux selon la revendication 4, dans lequel ladite pièce de serrage (13c) dudit élément support de corps principal de protège-genoux (3) est accouplée audit tirant (4) au moyen d'un collage.

6. Protège-genoux selon la revendication 1, dans lequel ledit corps principal de protège-genoux (2) comprend en outre une pluralité de plaques de renforcement (6) installées sur une paroi interne creuse dans la direction horizontale.

7. Protège-genoux selon la revendication 6, dans lequel ladite plaque de renforcement (6) comprend une partie pliable (6a) en forme de zigzag pour supporter facilement une rupture lorsque ledit choc est appliqué audit corps principal de protège-genoux (2).

8. Protège-genoux selon la revendication 7, dans lequel ledit corps principal de protège-genoux (2) comprend des moyens d'accouplement (9a, 9b; 10a, 10b) pour être fixé à un montant latéral à charnière et à une partie centrale du tableau de bord à cadre équipé (11) dudit véhicule.

9. Protège-genoux selon la revendication 1, dans lequel ledit corps principal de protège-genoux (2) présente une partie découpée (5) pour recevoir un couvercle de colonne de direction dudit véhicule dans sa partie centrale supérieure et au moins une paire de fixations est prévue audit plan avant dudit corps principal de protège-genoux (2) pour fixer ledit, au moins un, élément support de corps principal de protège-genoux (3).
